(19) Europäisches Patentamt

European Patent Office

Office européen des brevets

(11) **EP 4 620 285 A1**

(12) **DEMANDE DE BREVET EUROPEEN**

(43) Date de publication:
24.09.2025 Bulletin 2025/39

(21) Numéro de dépôt: 25163702.1

(22) Date de dépôt: **14.03.2025**

(51) Classification Internationale des Brevets (IPC):
**A01C 15/12** (2006.01)     **A01C 21/00** (2006.01)

(52) Classification Coopérative des Brevets (CPC):
**A01C 15/122; A01C 15/124; A01C 21/00**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **18.03.2024 FR 2402672**

(71) Demandeur: **Burel Production
35220 Chateaubourg (FR)**

(72) Inventeurs:
• **BOKSEBELD, Thomas
28120 OLLÉ (FR)**
• **GATEL, Yoann
35235 THORIGNÉ-FOUILLARD (FR)**
• **LOISELEUR, Frédéric
28190 Saint Georges sur Eure (FR)**

(74) Mandataire: **Vidon Brevets & Stratégie
16B, rue de Jouanet
35700 Rennes (FR)**

(54) **DISPOSITIF DE DOSAGE POUR SYSTÈME DE DISTRIBUTION DE PARTICULES POUR MACHINE AGRICOLE, PROCÉDÉ DE DOSAGE ET MACHINE AGRICOLE CORRESPONDANTS**

(57)     L'invention concerne un dispositif de dosage (20) pour système de distribution de particules pour machine agricole (200) pouvant se déplacer sur un terrain, comprenant un réservoir (21) présentant dans une partie inférieure un convoyeur (22) apte à transporter lesdites particules vers un orifice de sortie (23) dudit réservoir, comprenant au moins une trappe mobile, dite trappe aval (24), pouvant prendre une pluralité de positions entre une position fermée et une position ouverte. Selon l'invention, le dispositif de dosage comprend des moyens d'obtention d'une information $\alpha_{pente}$ représentative d'une pente d'un terrain sur lequel ladite machine agricole se déplace, et des moyens de pilotage de la position de la ou desdites trappes aval tenant compte de ladite information de pente $\alpha_{pente}$.

[Fig. 2]

**Description**

## 1. Domaine de l'invention

Le domaine de l'invention est celui de la distribution de particules pour l'agriculture, et notamment d'engrais, se présentant sous forme de granulés, de produits en vrac, de pellets ou de poudre. Plus précisément, l'invention concerne le dosage de ces particules, lors de leur distribution par une machine agricole.

## 2. Art antérieur et ses inconvénients

Il existe à ce jour deux principaux systèmes de distribution de particules pour machines agricoles, à savoir les épandeurs portés qui sont fixés sur le châssis du tracteur et portés par ce dernier, et les épandeurs traînés, ou tractés, qui comprennent un châssis et un ensemble de roues, et qui sont traînés par le tracteur. De tels épandeurs traînés ou portés comprennent également un réservoir, ainsi qu'un module d'épandage pour distribuer les particules à épandre. Les épandeurs traînés présentent généralement des réservoirs, ou trémies, de plus grande capacité que les épandeurs portés.

La présente invention s'applique aussi bien aux systèmes de distribution de particules de type épandeurs portés que de types épandeurs traînés ou tractés.

Dans de tels épandeurs, le module d'épandage reçoit généralement les particules par l'intermédiaire d'un convoyeur, formé par une bande transporteuse, ou tapis, circulant autour de cylindres de renvoi, ou rouleaux d'entraînement, dans la partie inférieure du réservoir d'alimentation. Le plus souvent, le convoyeur s'étend, dans le sens d'avancement de la machine agricole, de la partie avant vers la partie arrière du réservoir, et permet d'acheminer les particules du réservoir vers un orifice de sortie disposé sur la face arrière de ce dernier. Les particules tombent ensuite du convoyeur vers le module d'épandage situé en aval du réservoir.

Il existe en outre différents types de modules d'épandage susceptibles d'être fixés à l'arrière de tels épandeurs, en fonction de la nature du produit à épandre. Ces modules d'épandage sont fixés, de manière amovible, en dessous de l'orifice de sortie du réservoir.

A des fins tant économiques qu'environnementales, il existe une demande de plus en plus forte pour réaliser une agriculture de précision, permettant un contrôle fin de la quantité de particules à épandre sur une parcelle. Cette exigence de précision porte principalement sur les produits de type engrais granulés, distribués au moyen de disques rotatifs centrifuges de précision.

Plusieurs systèmes de dosage de la quantité de particules à épandre ont été proposés à ce jour.

Une première approche consiste à moduler la dose de particules à épandre, en agissant sur la vitesse de déplacement du tapis du convoyeur. L'orifice de sortie du réservoir d'alimentation est alors de section constante. L'augmentation de la vitesse de déplacement du convoyeur entraîne une augmentation de la dose de particules épandues. Une telle approche impose des contraintes fortes sur le système d'entraînement du convoyeur, qui s'avère donc complexe et coûteux, en particulier pour régler le rapport vitesse nécessaire pour moduler la dose à distribuer.

Une seconde approche consiste à moduler la dose de particules à épandre en agissant sur la section de l'orifice de sortie du réservoir. Le convoyeur se déplace alors à une vitesse proportionnelle à la vitesse d'avancement de la machine agricole, et le réglage de la dose se fait en ouvrant plus ou moins l'orifice de sortie, au moyen d'une trappe mobile.

Dans ce type de système de modulation du dosage, la ou les trappes d'obturation de l'orifice de sortie du réservoir sont le plus souvent verticales, ou suivent éventuellement la forme généralement tronconique de la trémie ou du réservoir, la ou les trappes rentrant alors vers l'intérieur du réservoir.

Lorsque la trappe (ou les trappes) est en position fermée, son extrémité inférieure se trouve généralement à une assez grande distance en amont du point à partir duquel les particules tombent du tapis du convoyeur vers le module d'épandage, typiquement de l'ordre de 400 mm. Considérant une vitesse de déplacement de la machine agricole d'environ 10 km/h, il en résulte que la machine agricole peut avoir parcouru jusqu'à 15 m environ dans le champ, entre le moment où l'on ferme totalement la trappe mobile pour cesser l'alimentation du module d'épandage en particules, et le moment où le module d'épandage cesse effectivement de distribuer toutes les particules qui étaient déjà présentes sur le convoyeur en aval de l'orifice de sortie au moment de la fermeture. Le temps et la distance de réactivité sont donc beaucoup trop longs, avec ce type de système, pour permettre un bon dosage de l'engrais dans toutes les circonstances.

Le document de brevet EP 3 138 375 de la Demanderesse décrit une technique de dosage permettant une alimentation contrôlée du module d'épandage sans délai de réaction, ou avec un délai de réaction minimal, via l'utilisation d'au moins une trappe mobile inclinée par rapport au plan du convoyeur, la position de la trappe inclinée permettant d'être au plus proche de la chute du produit en sortie du convoyeur vers le dispositif d'épandage.

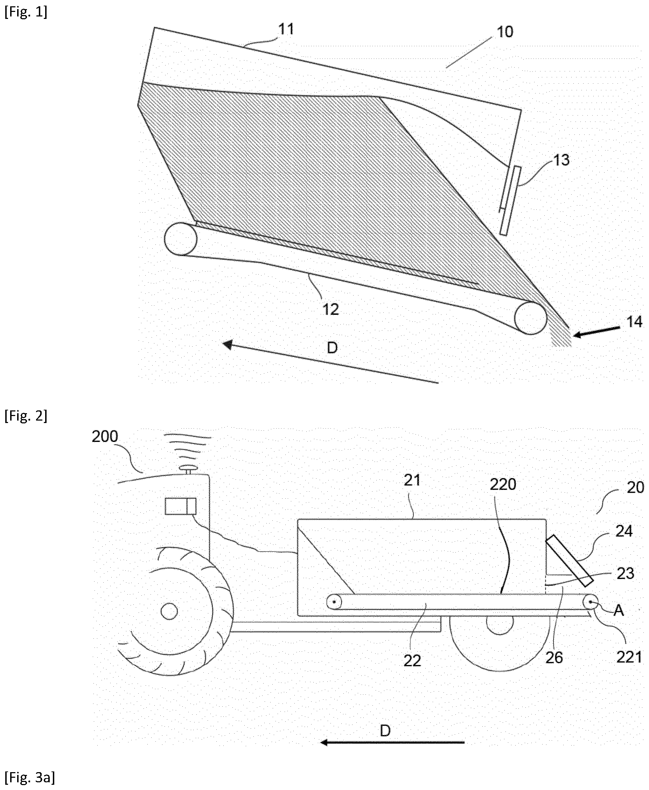

Cependant, les terrains agricoles, sur lesquels les particules sont épandues, ne sont pas toujours plats et l'épandeur peut ainsi évoluer sur des pentes, ce qui peut conduire à des situations critiques pour la bonne maitrise de l'écoulement des particules, remettant en cause les techniques basées sur un déplacement en terrain plat. En effet, lorsque la machine agricole est inclinée par rapport à une position horizontale, l'angle de talutage, ou angle de talus, des particules par rapport à un repère lié à l'épandeur, diminue ou augmente, selon l'angle de la pente. Comme illustré en figure 1, pour un système de distribution 10 d'un épandeur (non illustré) comprenant une trémie 11 (ou réservoir) et une trappe mobile verticale 13, cela peut aller par exemple jusqu'à ce que la pente de talutage des particules aille au-delà du point de chute des particules du système de convoyeur 12 vers le système d'épandage, et donc engendrer une coulée continue 14 des particules.

On rappelle que l'angle de talus/talutage est un angle de pente caractéristique de certains matériaux. Lorsqu'un matériau granulaire ou pulvérulent se dépose par gravité sur une surface, il tend à se former, lorsque suffisamment de grains sont déposés, un tas de forme conique. L'angle de pente du cône par rapport à la surface, également appelé angle de talus ou de talutage, est, dans une large mesure, une caractéristique de la nature des particules, mais également de leur géométrie, de leurs dimensions et de l'homogénéité de leurs tailles dans l'ensemble du tas. Un tel angle de talus est, pour les particules à épandre par un système d'épandage agricole, généralement compris entre 30° et 40°.

Les techniques précédemment décrites ne permettent donc pas de maitriser l'écoulement des particules depuis le réservoir, et donc ne permettent pas le respect de la dose souhaitée de particules à épandre, quelle que soit la pente du terrain sur lequel se déplace la machine agricole. Dans certaines situations de forte pente, les fuites de produits peuvent même rendre les machines inutilisables.

Il existe donc un besoin d'une technique de dosage des particules pour systèmes de distribution pour machine agricole qui ne présente pas ces différents inconvénients de l'art antérieur.

Notamment, il existe un besoin d'une telle technique qui permette de réaliser un épandage de précision avec un contrôle précis de la dose à épandre quelle que soit la configuration du terrain sur lequel se déplace la machine agricole, et notamment en cas de pente et/ou dévers. Plus précisément, il existe un besoin d'une telle technique qui permette de répondre aux exigences de l'agriculture de précision, en offrant une réactivité accrue de la modification de la dose à épandre par rapport aux systèmes antérieurs au cours du déplacement de la machine agricole sur le terrain à épandre.

Il existe également un besoin d'une telle technique qui soit simple et peu coûteuse.

### 3. Exposé de l'invention

L'invention répond à ce besoin en proposant un dispositif de dosage pour système de distribution de particules pour machine agricole pouvant se déplacer sur un terrain, comprenant un réservoir présentant dans une partie inférieure un convoyeur apte à transporter les particules vers un orifice de sortie du réservoir, comprenant au moins une trappe mobile, dite trappe aval, pouvant prendre une pluralité de positions entre une position fermée et une position ouverte. Le dispositif de dosage comprend des moyens d'obtention d'une information $\alpha_{pente}$ représentative d'une pente d'un terrain sur lequel la machine agricole se déplace, et des moyens de pilotage de la position de la ou des trappes aval tenant compte de l'information de pente $\alpha_{pente}$.

Ainsi, l'invention repose sur une approche tout à fait nouvelle et inventive du dosage de particules pour les systèmes d'épandage agricoles permettant de tenir compte de la configuration du terrain sur lequel se déplace l'épandeur. Pour ce faire, le dispositif de dosage détecte la pente du terrain, au cours du déplacement de l'épandeur, afin que les moyens de pilotage dont il est équipé augmentent ou diminuent l'ouverture de la ou des trappes aval en fonction de la pente détectée. La position de la ou des trappes aval tient donc compte de la configuration du terrain sur lequel se déplace l'épandeur, régulant ainsi le volume de particules qui s'écoule afin de respecter en temps réel et avec précision la dose souhaitée de particules. L'invention permet de compenser efficacement et précisément les effets qu'occasionne, sur la dose épandue de particules, la configuration du terrain sur lequel se déplace la machine agricole, sans nécessiter de système de trappes ou volets complémentaire pour empêcher l'écoulement non maitrisé de l'engrais en cas de forte pente par exemple. Cette solution ne nécessite pas non plus d'action pour l'opérateur, les moyens de pilotage constituant un asservissement automatique de la position de la ou des trappes aval en fonction de la pente détectée. Par ailleurs, cette technique permet de conserver les avantages d'un dosage volumétrique, i.e. sans agitateur, tout en permettant l'utilisation de la machine agricole qui en est équipée sur des sols en pentes.

Les moyens d'obtention de l'information de pente $\alpha_{pente}$ comprennent par exemple un ou plusieurs capteurs d'inclinaison, ou inclinomètres, portés par l'épandeur ainsi que des moyens de transmission de cette information de pente $\alpha_{pente}$ à un calculateur intégré et potentiellement déjà présent, pour d'autres fonctionnalités, sur l'épandeur. De tels capteurs d'inclinaison mesurent l'angle de la machine par rapport à un référentiel, il est donc nécessaire, pour mesurer une pente, d'effectuer une tare (mise à 0) du capteur attelé à un épandeur dans les conditions d'épandage (pneumatiques, hauteur d'attelage, type de tracteur...).

Par ailleurs, les moyens de pilotage comprennent d'une part des actionneurs dédiés, par exemple des vérins d'actionnement, pour modifier la position de la ou des trappes aval, et d'autre part des moyens de traitement de données. De tels moyens de traitement de données reçoivent des données telles que l'information de pente $\alpha_{pente}$ en provenance d'un capteur d'inclinaison (directement ou via un calculateur intégré dans l'épandeur par exemple) et transmettent des commandes de pilotage des actionneurs pour modifier la position de la ou des trappes aval. Ces différents moyens peuvent être regroupés.

Par exemple, les moyens de pilotage réduisent l'ouverture de ladite au moins une trappe aval lorsque l'information de pente $\alpha_{pente}$ correspond à une pente positive dans le sens de déplacement de la machine agricole, de sorte à ne pas se placer dans une situation d'écoulement continu des particules.

Selon un mode de réalisation de l'invention, les moyens de pilotage délivrent une information de limite d'ouverture de ladite au moins une trappe aval tenant compte de l'information de pente $\alpha_{pente}$ et d'une information $\alpha_T$ d'angle de talus caractéristique des particules. Cette information de limite d'ouverture correspond plus particulièrement à un point au-delà duquel la dose de particules souhaitée ne serait pas respectée à cause de la pente du terrain, et/ou un risque potentiel d'écoulement intempestif du produit, même à l'arrêt, est accru. En effet, dans le cas d'une pente positive par exemple, si la ou les trappes aval sont ouvertes au-delà de ce point, le ravitaillement en particules est trop important et le dosage s'en trouve donc faussé. Afin de délivrer une information de limite d'ouverture optimale, les moyens de pilotage tiennent donc non seulement compte de la pente détectée mais également des caractéristiques des particules à épandre, et plus particulièrement de leur angle de talus. De cette manière, dans une situation de pente positive dans le sens de déplacement de l'épandeur, les moyens de pilotage sont capables de réduire l'ouverture de la trappe mobile de sorte qu'elle vienne au moins en contact avec la pente formée par les particules au talutage. Cette solution garantit également la polyvalence de la machine en tenant compte de certaines spécificités du produit à épandre et en étant donc adaptable selon le type de particules, de façon dynamique.

Selon un aspect particulier, ladite au moins une trappe aval est inclinée par rapport au plan du convoyeur, de façon que, en position totalement fermée, une extrémité inférieure de la trappe aval se situe sensiblement à la verticale d'un axe de rotation d'un rouleau ou tambour d'entraînement du convoyeur, à proximité de l'extrémité de sortie du convoyeur. Ainsi, en position fermée, la ou les trappes aval se situe(nt) à l'aplomb du point où les particules quittent le tapis. Ceci permet une alimentation contrôlée du module d'épandage sans délai de réaction, ou avec un délai de réaction minimal car la position de la trappe permet d'être au plus proche de la chute du produit en sortie du convoyeur vers le dispositif d'épandage. La valeur du débit réglée en amont est donc contrôlée instantanément au niveau de la chute du produit à épandre (pas de délai entre le réglage par les trappes et la chute). La précision instantanée du dosage est ainsi améliorée. Par ailleurs, l'actionnement de la ou des trappes aval est facilité par leur inclinaison, du fait que les trappes ne « rentrent » pas dans les particules quand on les fait descendre pour obturer l'orifice de sortie.

De plus, dans ce cas, l'information de limite d'ouverture tient également compte de l'inclinaison de la ou des trappes aval, via une information $\alpha_{trappe}$ d'inclinaison de ladite au moins une trappe aval. Ainsi, selon ce mode de réalisation, le dispositif de dosage de l'invention bénéficie des avantages précités d'une trappe aval inclinée et les moyens de pilotage de la position de la trappe aval inclinée tiennent compte de l'angle d'inclinaison de la trappe pour calculer plus précisément l'information de limite d'ouverture, optimisant ainsi la précision du dosage de particules.

Selon un mode de réalisation de l'invention, l'information de limite d'ouverture tient compte d'un point E dont les coordonnées $(X_E ; Y_E)$ sont calculées comme suit, dans un référentiel R défini par un axe d'abscisse s'étendant dans le plan du convoyeur et parallèle à la direction de déplacement du convoyeur et un axe d'ordonnée s'étendant perpendiculairement au plan du convoyeur et passant par la paroi arrière du réservoir :

$$(X_E ; Y_E) = ([Y_D - Y_C]/[Tan\alpha_{trappe} - Tan\alpha] ; Y_D - X_E * Tan\alpha_{trappe})$$

avec :

- $(X_A ; Y_A)$ correspondant aux coordonnées de l'axe A, dans le référentiel R, du tambour d'entrainement du convoyeur, paramètre connu pour le dispositif de dosage considéré

- $\alpha_{convoyeur}$ correspondant à l'angle d'inclinaison du tapis du convoyeur, paramètre connu pour le dispositif de dosage considéré

- 

$$\alpha = \alpha_T + \alpha_{convoyeur} - \alpha_{pente}$$

- $(X_B ; Y_B) = (X_A + Sin\alpha * [AB] ; Y_A + Cos\alpha * [AB])$ avec $[AB]$ correspondant au rayon du tambour d'entrainement du convoyeur, de centre A, paramètre connu pour le dispositif de dosage considéré

- 

$$(X_C ; Y_C) = (0 ; Y_B + X_B * Tan\alpha)$$

4

- $(X_D ; Y_D)$ correspondant au point d'intersection entre la surface arrière du réservoir et la surface de glissement de ladite au moins une trappe aval, paramètre connu pour le dispositif de dosage considéré.

Ainsi, les moyens de pilotage détermine les coordonnées d'un point à partir de données obtenues en temps réel au cours du déplacement de l'épandeur (comme l'information représentative de la pente du terrain) et de données connues associées à l'épandeur lui-même (comme le rayon du tambour d'entrainement du convoyeur, l'angle d'inclinaison du tapis du convoyeur ou encore l'angle d'inclinaison de la ou des trappes aval), ces coordonnées permettant ensuite de déterminer une information de limite d'ouverture de la ou des trappes aval. On observe donc que l'équation précitée permet d'obtenir une courbe définissant la limite d'ouverture d'une trappe aval en fonction de la pente du terrain sur lequel se déplace l'épandeur. A partir de cette courbe, le dispositif de dosage peut piloter l'ouverture de la trappe à chaque nouvelle information de pente obtenue, en suivant la formule précitée.

Selon un autre fonctionnement, dit par palier, le dispositif de dosage peut piloter l'ouverture de la trappe en tenant compte de valeurs de pente comprises dans des intervalles d'angles de pente. Ainsi, l'information de limite d'ouverture présente une valeur de coordonnée $Y'_E$, dite valeur palier, identique pour chaque valeur de l'information de pente $\alpha_{pente}$ comprise dans un intervalle donné, la valeur palier $Y'_E$ étant inférieure ou égale à la valeur de coordonnée $Y_E$.

Grâce à ce pilotage par palier de l'ouverture de la trappe aval, les calculs sont simplifiés, par exemple en prévoyant des paliers de fermeture supplémentaire de la trappe de 20% tous les 5° supplémentaires d'augmentation de la pente. Ce fonctionnement par palier permet également de limiter le nombre de mouvements mécaniques d'ouverture ou de fermeture de la trappe aval, donc de garantir une meilleure longévité des actionneurs et de la trappe elle-même. Avantageusement, ce fonctionnement par palier permet d'obtenir une meilleure précision du débit de sortie des particules en limitant les phases transitoires (entre deux positions de la ou des trappes aval). Enfin, cela évite les risques d'hystérésis et d'instabilité dus à des modifications trop fréquentes de la position de la ou des trappes aval.

Selon un aspect particulier, l'information $\alpha_{pente}$ est également représentative d'un dévers du terrain sur lequel la machine agricole se déplace, permettant ainsi de tenir compte non seulement de la pente dans le sens de déplacement de la machine mais également du dévers du terrain. En effet, le dévers, s'il est notable, entraine une accumulation, plus ou moins importante, des particules sur un des côtés latéraux du tapis du convoyeur. La présente technique permet d'en tenir compte également via des moyens d'obtention de l'angle de dévers et en ajustant l'information de pente pour tenir compte de l'angle de dévers obtenu/détecté.

Selon une caractéristique particulière, le dispositif de dosage comprend des moyens de régulation de la vitesse du convoyeur tenant compte de la position de ladite au moins une trappe aval et/ou de l'information de pente $\alpha_{pente}$. De cette manière, il est possible de moduler la vitesse du tapis pour affiner/ajuster les effets du pilotage de la position de la trappe aval. Par exemple, en cas de forte pente, les moyens de pilotage de la position de la trappe aval peuvent imposer une fermeture importante de la trappe aval pour éviter un écoulement continu des particules, entrainant potentiellement une diminution de la dose épandue en-deçà de la dose souhaitée. La régulation de la vitesse du tapis du convoyeur, en l'occurrence ici l'augmentation de la vitesse, permet de compenser cette diminution de la dose, afin de rétablir la dose souhaitée, tout en empêchant un écoulement continu.

Par exemple, les moyens de régulation de la vitesse du convoyeur tiennent compte de l'information de limite d'ouverture E et donc de la position de la trappe mobile aval.

Une telle combinaison de moyens, agissant à la fois sur l'ouverture de la ou des trappes mobiles aval et sur la vitesse du convoyeur, en tenant compte, de façon dynamique, à la fois de la pente détectée au fur et à mesure du déplacement de l'épandeur et de l'angle de talus des particules à épandre, permet d'obtenir des performances optimales d'épandage en termes de précision et de réactivité, quelle que soit la configuration du terrain.

Selon un autre aspect particulier, le dispositif de dosage comprend des moyens de réglage d'un angle d'inclinaison de la ou des trappes aval, notamment pour tenir compte de caractéristiques des particules à épandre, comme l'angle de talus, et optimiser ainsi la précision du dosage souhaité de particules à épandre. On peut prévoir un angle d'inclinaison de la ou des trappes aval proche ou correspondant à l'angle de talus moyen des particules à épandre par le système de distribution. Comme l'angle d'inclinaison de la trappe suit sensiblement l'angle de talus des particules, la réactivité entre une modification de la position de l'ouverture de la trappe (ou des trappes) et la chute des particules vers le module d'épandage est accrue. On obtient ainsi, selon le dispositif de dosage de l'invention, une très bonne précision et une grande réactivité. De plus, les mouvements de montée/descente des trappes se passent sans effort, grâce à l'angle de talus qui réduit les frictions entre trappes et particules. Il est ainsi possible de prévoir des moyens d'actionnement des trappes sous la forme de vérins de petite taille et faible puissance, plus réactifs, ce qui est aussi économiquement avantageux.

Selon une caractéristique particulière de l'invention, le dispositif de dosage comprend un tunnel d'amenée des particules, présentant une ouverture d'entrée et une ouverture de sortie, l'ouverture de sortie étant contrôlée par la ou les trappes aval et l'ouverture d'entrée étant contrôlée par une deuxième trappe, dite trappe amont. Ce tunnel permet de réguler l'arrivée des particules au niveau de la ou des trappes aval et ainsi d'éviter les phénomènes de compression et de blocage tout en réduisant les efforts et les pressions sur la ou les trappes. Ce tunnel a également pour avantage de réduire les fuites de particules, et de faciliter le dimensionnement des actionneurs des trappes. Ce tunnel est notamment avantageux pour le dosage précis des produits élaborés et l'épandage de granulés par tronçonnement de la largeur d'épandage.

Dans le cadre de l'invention, le dispositif de dosage comprend des moyens de pilotage de l'ouverture de la trappe amont, tenant compte également de l'information représentative de la pente $\alpha_{pente}$. De cette manière, la pente détectée est prise en compte dès la sortie des particules du réservoir, au niveau de la position de la trappe amont, ainsi qu'au niveau de la ou des trappes aval, augmentant ainsi les performances de dosage tout en limitant les risques de blocage des particules par compression avant leur sortie vers le dispositif d'épandage.

Par exemple, les moyens de pilotage de l'ouverture de la trappe amont agissent de façon à ménager un décrochement par rapport à la partie supérieure du tunnel, afin de limiter encore le risque de compression des particules au niveau des trappes aval. Ainsi, ce décrochement à l'entrée du tunnel a pour effet de cisailler la petite masse de produit qui se trouve bloquée par l'arête de la trappe amont et en même temps entraînée, vers le tunnel, par le flux de produit en dessous (animé par le tapis du convoyeur). Ces deux actions opposées font tourner la masse des particules, qui se trouve ensuite libre de tourner et d'avancer sans contraintes dans le tunnel. Cette solution est très simple et peu coûteuse et ne nécessite aucun recours à un système de volet escamotable, qui présente l'inconvénient de ne plus être actionnable lorsque la machine est remplie. De plus, cette solution présente une grande facilité d'utilisation de la machine pour un conducteur non expérimenté.

Il est à noter que lorsque deux trappes mobiles aval sont mises en œuvre, une première variante de réalisation prévoit un tunnel avec une trappe amont et une deuxième variante de réalisation prévoit deux tunnels présentant chacun une trappe amont.

Selon un aspect particulier, le dispositif de dosage comprend également des moyens de détection d'une compression, ou pression supérieure à un seuil prédéterminé, dans le tunnel, permettant ainsi de détecter très précocement un probable bourrage à venir. En effet, quand il y a une pente importante, le produit peut commencer à suralimenter le tunnel et donc à monter en pression.

Par exemple, le dispositif de dosage comprend des moyens de génération d'une alarme, dite alarme de bourrage, si une compression est détectée par les moyens de détection pendant un laps de temps prédéterminé. Ainsi, le conducteur de la machine est informé d'un potentiel bourrage à venir et peut mettre en œuvre des actions préventives et/ou correctives.

Selon une variante, si une compression est détectée, les moyens de régulation de la vitesse du convoyeur sont activés afin de diminuer la quantité de particules à l'entrée du tunnel et d'éviter un bourrage, tout en informant le conducteur de la machine de sorte qu'il sache que la dose souhaitée de particules à épandre risque de ne pas être correcte ponctuellement.

Selon encore une variante, les moyens de régulation de la vitesse du convoyeur arrêtent le tapis et l'utilisateur se voit proposer d'aller dans un mode spécifique pour débourrer.

Par exemple, les moyens de détection d'une compression comprennent au moins un des éléments appartenant au groupe comprenant :

- au moins un capteur de pression monté dans le tunnel ;
- au moins un capteur de déplacement d'un volet mobile monté sur la partie supérieure du tunnel ;
- au moins une caméra placée en sortie du tunnel ;
- au moins un capteur de pesée monté dans le tunnel ;
- au moins un capteur de mesure de puissance d'au moins un actionneur pilotant l'une des trappes aval,
- au moins un capteur d'effort sur l'une des trappes aval.

L'invention concerne également un procédé de dosage pour système de distribution de particules pour machine agricole pouvant se déplacer sur un terrain, comprenant un réservoir présentant dans une partie inférieure un convoyeur apte à transporter les particules vers un orifice de sortie du réservoir, comprenant au moins une trappe mobile pouvant prendre une pluralité de positions entre une position fermée et une position ouverte, et comprenant :

- une étape d'obtention d'une information $\alpha_{pente}$ représentative d'une pente d'un terrain sur lequel la machine agricole se déplace et
- une étape de pilotage de la position de la trappe en fonction de ladite information de pente $\alpha_{pente}$.

Un tel procédé pourra bien sûr présenter les différentes caractéristiques relatives au dispositif de dosage selon l'invention, qui peuvent être combinées ou considérées isolément. Ainsi, les caractéristiques et avantages de ce procédé sont les mêmes que ceux du dispositif de dosage et ne sont pas détaillés plus amplement.

L'invention concerne également une machine agricole de distribution de particules, comprenant un réservoir présentant dans une partie inférieure un convoyeur apte à transporter les particules vers un orifice de sortie du réservoir et un système de distribution de particules mettant en œuvre un dispositif de dosage tel que décrit précédemment et comprenant au moins une trappe mobile, dite trappe aval, pouvant prendre une pluralité de positions entre une position fermée et une position ouverte, le dispositif de dosage comprenant des moyens d'obtention d'une information $\alpha_{pente}$ représentative d'une pente d'un terrain sur lequel la machine agricole se déplace, et des moyens de pilotage de la position de la ou des trappes aval tenant compte de l'information de pente $\alpha_{pente}$.

## 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

- la figure 1 illustre un exemple de dispositif de dosage selon l'art antérieur ;
- la figure 2 illustre un schéma de principe d'un système de distribution de particules ;
- la figure 3a illustre un exemple de pilotage d'une trappe aval, verticale, en fonction de la pente du terrain ;
- la figure 3b illustre un exemple de pilotage d'une trappe aval, inclinée, en fonction de la pente du terrain ;
- la figure 4 illustre un exemple de calcul de la position de la trappe aval en fonction de la pente ;
- la figure 5 représente une courbe issue du calcul de la position de la trappe aval en fonction de la pente, pour un angle de talus des particules de 27° ;
- la figure 6 illustre une courbe de fonctionnement par palier, pour différents angles de talus des particules ;
- la figure 7a illustre une situation optimale de réglage de la trappe aval, sur terrain plat ;
- la figure 7b illustre une situation optimale de réglage de la trappe aval, sur terrain en légère pente ;
- la figure 7c illustre une situation avant mise en œuvre de l'invention, sur terrain en pente notable ;
- la figure 7d illustre la situation de la figure 7c, après mise en œuvre de l'invention ;
- la figure 8 illustre un tunnel d'amenée des particules dans le dispositif de dosage, selon un mode de réalisation de l'invention ;
- la figure 9 illustre un procédé de dosage selon un mode de réalisation de l'invention.

## 5. Description détaillée de modes de réalisation de l'invention

Le principe général de l'invention repose, dans un dispositif de dosage pour système de distribution de particules d'une machine agricole, sur la prise en compte de la pente du terrain sur lequel se déplace la machine agricole, afin de respecter la dose souhaitée de particules à épandre alors que la pente perturbe l'arrivée des particules dans le dispositif de dosage. On peut ainsi réaliser un épandage de précision, à partir d'un épandeur classique que l'on équipe d'un tel dispositif de dosage, quelle que soit la configuration du terrain.

On pourrait envisager de répondre à cette problématique rencontrée sur des terrains avec des pentes, en augmentant la distance entre la trappe mobile et le point de chute de particules sur le système de convoyeur en allongeant ce dernier. Une telle solution aurait cependant pour conséquence d'augmenter la longueur du convoyeur et donc son encombrement global. Son coût ainsi que la consommation d'énergie pour l'entrainer seraient également augmentés, alors que la réactivité de la machine serait diminuée, pour les aspects de « section control » par exemple.

Les inventeurs ont donc développé une solution différente et plus performante, qui consiste à doter le dispositif de dosage de moyens d'obtention d'une information représentative de la pente, laquelle est utilisée par des moyens de pilotage de la position d'une ou plusieurs trappe aval située(s) au niveau d'un orifice de sortie du réservoir du système de distribution de particules. Ainsi, l'effet de la pente du terrain sur le comportement des particules dans le système de distribution, est compensé par un ajustement de la taille de l'ouverture de la ou des trappes aval, pour maintenir, en temps réel et quelle que soit la configuration du terrain, la dose à épandre souhaitée.

Ce principe général est décrit plus en détails ci-après, en relation avec les figures 2 à 8 et différents modes de réalisation et variantes.

On présente tout d'abord, en relation avec la figure 2, un schéma de principe d'un système de distribution de particules pour machine agricole 200 comprenant un dispositif de dosage 20 alimenté en particules de produit à épandre par l'intermédiaire d'un convoyeur 22 situé en dessous d'un réservoir, ou trémie 21. Un tel système de distribution de particules peut être traîné ou porté par la machine agricole. En outre, il peut s'agir d'un distributeur de produit en vrac, granulés, poudre, bouchons, ou vrac humide.

Le fond du réservoir 21 comporte une ouverture longitudinale sous laquelle est disposé le convoyeur 22. Ce dernier comprend une bande transporteuse 220, ou tapis, qui est mise en mouvement par un cylindre de renvoi arrière 221, encore appelé rouleau ou tambour d'entrainement, mobile en rotation autour d'un axe A, ainsi que des rouleaux d'entraînement (non illustrés) disposés le long du tapis 220. Le convoyeur 22 comporte une partie arrière correspondant à la partie du convoyeur se trouvant sous le dispositif de dosage 20, ainsi qu'une partie avant correspondant à la partie du convoyeur située sous le réservoir 21.

Quand la machine agricole avance, dans le sens de déplacement indiqué par la flèche D, le produit est transporté à l'extérieur du réservoir 21 par le tapis 220 vers un orifice de sortie 23 (matérialisé par des traits pointillés).

Le dispositif de dosage 20 illustré, selon un mode de réalisation de l'invention, comprend au moins une trappe mobile 24, dite trappe aval. Ainsi, le choix du réglage du débit de sortie des particules du système de distribution se fait en réglant la section de sortie du réservoir 21, par réglage du niveau d'ouverture de la trappe aval 24.

Dans ce mode de réalisation, le dispositif de dosage comprend une trappe aval 24, mais une variante de réalisation prévoit la présence de deux trappes aval, dont les positions respectives sont pilotées de manière indépendantes par les moyens de pilotage de l'invention, notamment pour permettre un épandage sur une demi-largeur ou pour gérer la largeur de la nappe d'épandage, par exemple dans les pointes de champs.

De plus, selon ce mode de réalisation illustré en figure 2, la trappe aval 24 est inclinée. Elle peut cependant être verticale, selon une autre variante de réalisation. Ici, l'angle d'inclinaison de la trappe aval 24 par rapport au plan du tapis 220 du convoyeur 22 est un angle aigu, de façon à former un entonnoir dans le sens d'écoulement du produit. De cette manière, le poids des particules ne repose pas de façon excessive sur la ou les trappes aval 24 et ne génère donc pas des forces de friction importantes lors de leur ouverture ou de leur fermeture.

Selon un mode de réalisation, non illustré, l'angle d'inclinaison de la ou des trappes aval peut être réglé par des moyens de régalage du dispositif de dosage, par exemple pour coïncider sensiblement à l'angle de talus du produit à épandre, qui est généralement compris entre 30° et 40°, le plus souvent proche de 35°. Ceci permet notamment d'éviter un écoulement par gravité des particules au travers de l'ouverture de la ou des trappes aval, lorsque le tapis 220 est immobile. En effet, lorsque le tapis 220 est à l'arrêt, et que la ou les trappes aval sont totalement ouvertes (position la plus haute), les particules restent immobiles, car l'angle du tas qu'elles forment est égal à leur angle de talus.

Ainsi, au lieu de prévoir un unique dispositif de dosage 20 à fixer à l'arrière du système de distribution de particules, dans lequel l'angle d'inclinaison de la trappe aval 24 est égal à l'angle de talus moyen des particules à épandre par un tel système de distribution, ou de prévoir plusieurs dispositifs de dosage 20, présentant des inclinaisons de trappes différentes que l'on choisit en fonction des particules à épandre et leur angle de talus, l'invention permet de régler dynamiquement, selon le type de particules à épandre, le degré d'inclinaison de la ou des trappes aval, rendant le dispositif de dosage modulaire et polyvalent.

De plus, l'extrémité inférieure de la trappe aval 24, lorsque celle-ci est fermée, se situe sensiblement à la verticale de l'axe de rotation horizontal A du tambour 221 d'entraînement du convoyeur 22. En d'autres termes, l'extrémité inférieure de la trappe aval 24, en position fermée, est située légèrement en amont du point à partir duquel les particules quittent le convoyeur 22 vers le module d'épandage (non représenté sur la figure 2). Par exemple, cette extrémité de la trappe aval 24 est située entre 0 et 100 mm en amont de l'axe horizontal A dans le sens d'avancement D de la machine agricole.

Comme déjà indiqué, les moyens de pilotage de la position de la ou des trappes aval 24 comprennent notamment des actionneurs, par exemple des vérins électriques, et les guides de trappes sont extériorisés par rapport aux trappes pour limiter leur risque d'encrassement, faciliter l'entretien et également apporter une surface de guidage plus importante.

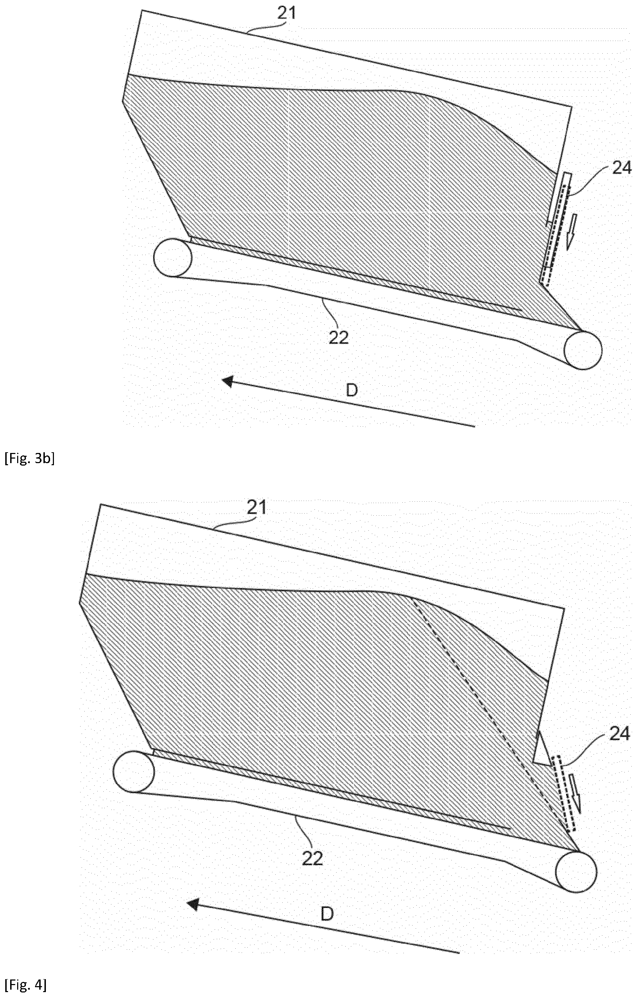

On décrit maintenant, en relation avec les figures 3a et 3d, deux situations dans lesquelles les moyens de pilotage de la position de la trappe aval 24 du dispositif de dosage selon l'invention permettent d'éviter une situation d'écoulement continu en présence d'un terrain en pente positive dans le sens de déplacement D. Comme on peut le voir sur la figure 3a avec une trappe aval 24 verticale et sur la figure 3b avec une trappe aval 24 inclinée, le principe réside dans le fait que la trappe aval 24 vienne au moins en contact avec la pente formée par les particules au talutage. De cette manière, pour que les particules tombent du convoyeur vers le système d'épandage, il faudra un mouvement du système de convoyeur.

Comme illustré sur ces figures 3a et 3b par des flèches le long de la trappe aval 24, les moyens de pilotage doivent donc connaître la position optimale de la trappe permettant d'atteindre cet objectif de contact entre la trappe aval 24 et l'angle de talus des particules. Dans ces exemples, la pente est positive dans le sens de déplacement de l'épandeur, et la ou les trappes doivent donc être moins ouvertes pour limiter l'écoulement des particules. Pour un sens de pente négatif dans le sens de déplacement de l'épandeur, la ou les trappes doivent être au contraire plus ouvertes.

Pour ce faire, le dispositif de dosage selon l'invention comprend donc des moyens d'obtention d'une information $\alpha_{pente}$ représentative d'une pente d'un terrain sur lequel la machine agricole se déplace, information dont se servent les moyens de pilotage pour déterminer la position adéquate de la trappe aval, via le calcul d'une information de limite d'ouverture de la trappe. Pour cela, l'épandeur est équipé d'un capteur d'inclinaison qui renvoie une information de pente, par exemple à un calculateur intégré sur la machine. Comme détaillé ci-après, cette information $\alpha_{pente}$ sert, directement ou après traitement via des moyens de traitement d'information, aux moyens de pilotage pour générer des commandes d'actionnement de la ou des trappes aval.

Comme détaillé ci-après, cette information tient compte d'un point d'intersection entre la pente formée par les particules et la surface de glissement de la ou des trappes aval. Les moyens de pilotage de la position de la ou des trappes aval tiennent donc également compte, dynamiquement, d'une information $\alpha_T$ d'angle de talus des particules à épandre, puisque l'objectif est de faire coïncider la partie inférieure de la trappe aval avec les particules qui présentent un angle de talus spécifique selon le type de particules. Cette information d'angle de talus correspond par exemple à un paramètre issu d'une base de données de tests, par exemple la base de données Fertitest® de la Demanderesse.

Selon une variante, cette information d'angle de talus est mesurée dynamiquement, au cours du déplacement de la machine, par exemple grâce à un capteur d'angle de talus, de sorte à pouvoir prendre en compte une variation de l'angle de talus, en dynamique, conjointement avec les variations de la pente du terrain. En effet, les conditions climatiques peuvent changer au cours de l'utilisation de la machine agricole et avoir un impact significatif sur les particules et leur angle de talus, en particulier le degré d'hygrométrie qui peut être très différent entre un début de journée brumeux et humide et un après-midi sec et ensoleillé.

De plus, le calcul de l'information de limite d'ouverture de la trappe tient également compte de l'inclinaison de la trappe aval, le cas échéant.

Plus particulièrement, et comme illustré en figure 4, le calcul des coordonnées $(X_E; Y_E)$ du point E d'intersection entre la pente formée par les particules et la surface de glissement de la ou des trappes aval, qui détermine l'information de limite d'ouverture suit la formule suivante, dans un référentiel R défini par un axe d'abscisse s'étendant dans le plan du convoyeur et parallèle à la direction de déplacement du convoyeur et un axe d'ordonnée s'étendant perpendiculairement au plan du convoyeur et passant par la paroi arrière du réservoir :

$$(X_E ; Y_E) = ([Y_D - Y_C]/[Tan\alpha_{trappe} - Tan\alpha] ; Y_D - X_E * Tan\alpha_{trappe})$$

avec :

- $(X_A; Y_A)$ correspondant aux coordonnées de l'axe A, dans le référentiel R, du tambour d'entrainement du convoyeur. Ce paramètre est connu pour le dispositif de dosage considéré, et correspond par exemple à (404 ; -119) ;
- $\alpha_{convoyeur}$ correspondant à l'angle d'inclinaison du tapis du convoyeur, de valeur comprise de préférence entre 3,5° et 4,5°. Cet angle est également un paramètre connu pour le dispositif de dosage considéré ;
- $\alpha = \alpha_T + \alpha_{convoyeur} - \alpha_{pente}$. Par exemple, l'angle d'inclinaison de la trappe aval est de 52° ;
- $(X_B; Y_B) = (X_A + Sin\alpha * [AB] ; Y_A + Cos\alpha * [AB])$ avec [AB] correspondant au rayon du tambour d'entrainement 221 du convoyeur, de centre A connu pour le dispositif de dosage considéré ;
- 

$$(X_C ; Y_C) = (0 ; Y_B + X_B * Tan\alpha) ;$$

- $(X_D; Y_D)$ correspondant au point d'intersection entre la surface arrière 210 du réservoir et la surface de glissement de la trappe aval 24. Par exemple, ce point d'intersection, connu pour le dispositif de dosage considéré, a pour coordonnées (0 ; 454,4).

Par exemple, l'information de pente $\alpha_{pente}$ lue par un capteur d'inclinaison est traitée pour tenir compte également de l'angle d'inclinaison du convoyeur $\alpha_{convoyeur}$, avant d'être transmise aux moyens de traitement des moyens de pilotage pour calculer l'information de limite d'ouverture de la trappe aval 24, selon la formule ci-dessus.

Selon un autre exemple, l'information de pente $\alpha_{pente}$ lue par un capteur d'inclinaison est transmise sans traitement aux moyens de traitement des moyens de pilotage pour calculer l'information de limite d'ouverture de la trappe aval 24, selon la formule ci-dessus.

Selon encore un autre exemple, l'information de limite d'ouverture de la trappe aval 24 est calculée par le calculateur de l'épandeur, selon la formule ci-dessus, et transmise aux moyens de pilotage pour générer la ou les commandes de pilotage de la position de la ou des trappes aval.

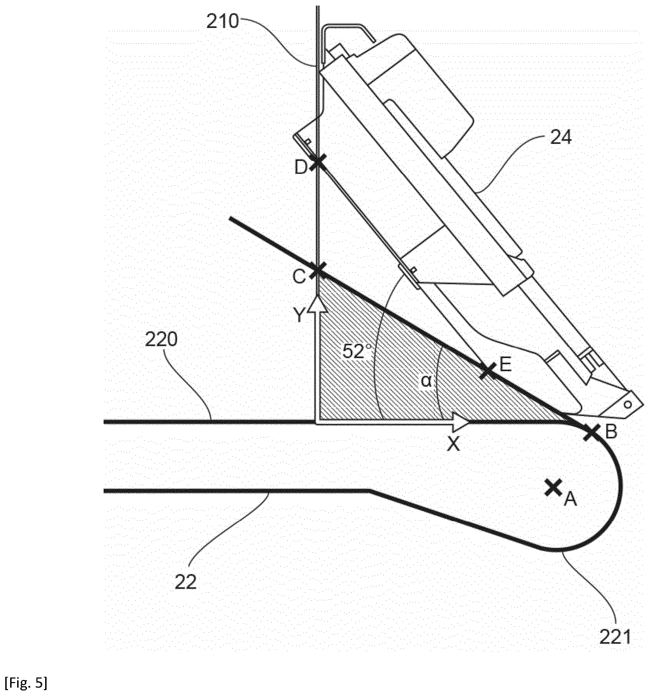

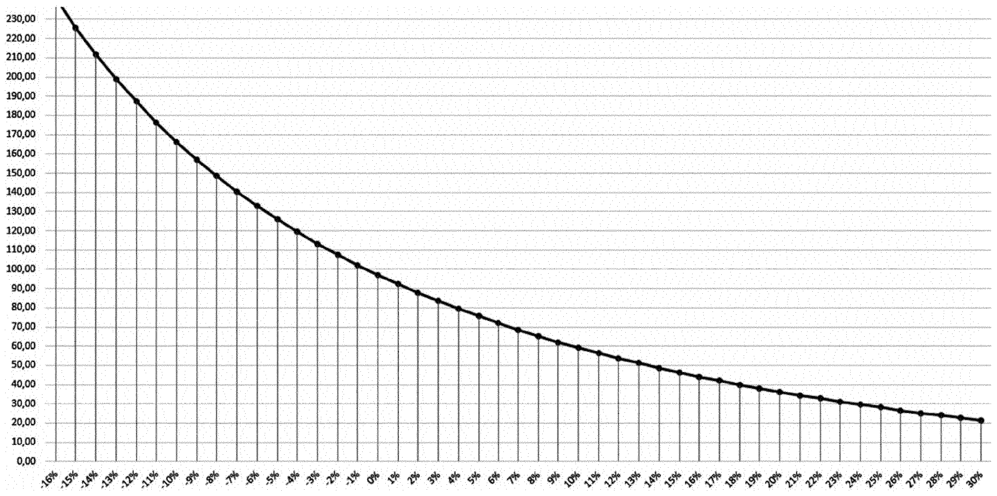

La figure 5 illustre un exemple de courbe issue du calcul, à partir de la formule précitée, de la position de la trappe aval en fonction de la pente, pour un angle de talus des particules de 27°, et les valeurs de référence détaillées ci-dessus. On observe, comme attendu, que la hauteur d'ouverture de la trappe aval (en ordonnée) diminue avec l'augmentation de l'angle de la pente (en abscisse).

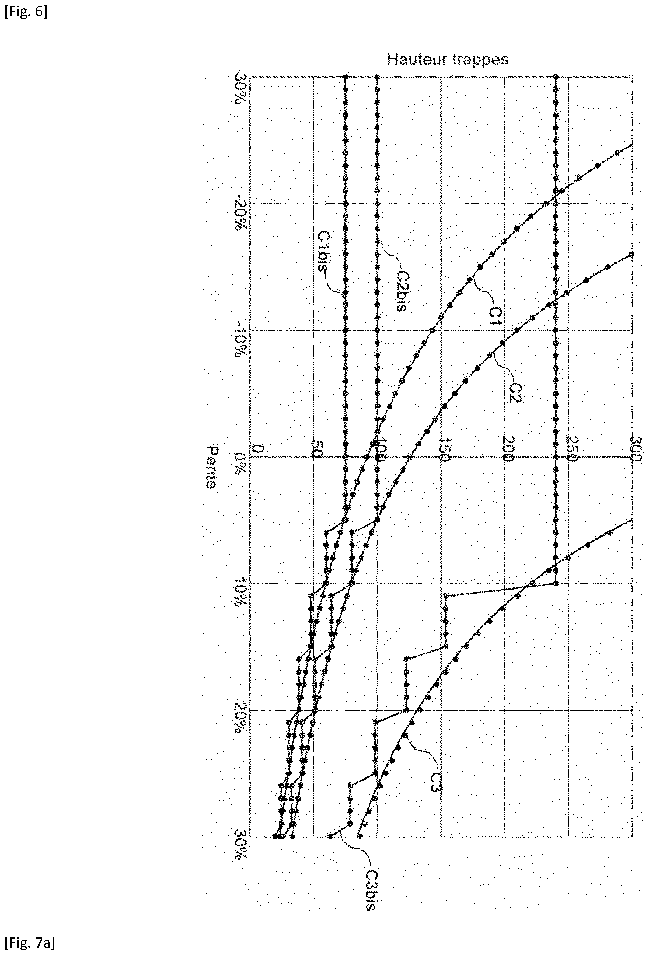

A partir de l'observation de différentes courbes obtenues pour différents types de particules, et donc différents angles de talus, les inventeurs ont constaté que la technique pouvait être simplifiée en termes de calculs, ainsi qu'en termes de mouvements de la trappe aval, en définissant des paliers de pilotage de la position de cette trappe, de sorte qu'une valeur unique d'ouverture de la trappe est associée à une plage de valeurs de pente. Ce fonctionnement par paliers est par exemple illustré en figure 6, pour trois types de particules présentant trois valeurs différentes d'angles de talus, extraites par exemple de la base de données Fertitest® de la Demanderesse, respectivement 27° (particules = engrais) pour les courbes C1 et C1bis (courbe par paliers), 33° (particules = Pellet) pour les courbes C2 et C2bis (courbe par paliers), 45° (particules = Vrac Humide) pour les courbes C3 et C3bis (courbe par paliers).

Pour la mise en œuvre de ce mode de réalisation par paliers, l'information de limite d'ouverture présente une valeur de coordonnée $Y'_E$, dite valeur palier, identique pour chaque valeur de l'information de pente $\alpha_{pente}$ comprise dans un intervalle donné, la valeur palier $Y'_E$ étant inférieure ou égale à la valeur de coordonnée $Y_E$ de l'équation décrite précédemment. Par exemple, pour les courbes C1bis et C2bis, la hauteur d'ouverture de la trappe aval diminue de 20% tous les intervalles correspondant à 5° d'augmentation de la pente, à partir d'une pente de 5%. Pour la courbe C3bis, la hauteur d'ouverture de la trappe aval diminue de 36% entre une pente à 10% et une pente à 15%, puis de 20% tous les intervalles correspondant à 5° d'augmentation de la pente, à partir d'une pente de 15%.

Comme déjà indiqué, ce fonctionnement par palier permet de tenir compte d'une évolution de la pente au cours du déplacement de l'épandeur, en modifiant par palier, et non à chaque détection d'un nouvel angle de pente, la hauteur d'ouverture de la ou des trappes aval, grâce aux moyens de pilotage du dispositif de dosage, limitant ainsi les mouvements de changement de la hauteur d'ouverture de la ou des trappes aval. De ce fait, la précision du débit de sortie des particules est améliorée, en limitant les phases transitoires (entre deux positions de la ou des trappes aval), en évitant les risques d'hystérésis et d'instabilité.

Selon une variante de réalisation, non illustrée, l'information de pente $\alpha_{pente}$ est également représentative d'un dévers du terrain sur lequel la machine agricole se déplace, de sorte à tenir compte aussi des effets d'un dévers du terrain pouvant par exemple entrainer une accumulation de particules sur un côté du tapis du convoyeur, déséquilibrant ainsi le volume de particules au niveau de la trappe aval. Selon cette variante, l'épandeur comprend des moyens de détection du dévers, par exemple à l'aide de l'inclinomètre servant à fournir l'information de pente, ou à l'aide d'un autre capteur d'inclinaison. Ensuite, les informations de pente et de dévers sont compilées pour délivrer une information de pente servant à piloter la position de la ou des trappes aval, selon la présente technique.

On décrit maintenant les figures 7a à 7d illustrant quatre situations de réglage d'une trappe aval, en fonction de l'évolution de la pente du terrain et de la mise en œuvre de l'invention, selon l'un quelconque des modes de réalisation décrit précédemment.

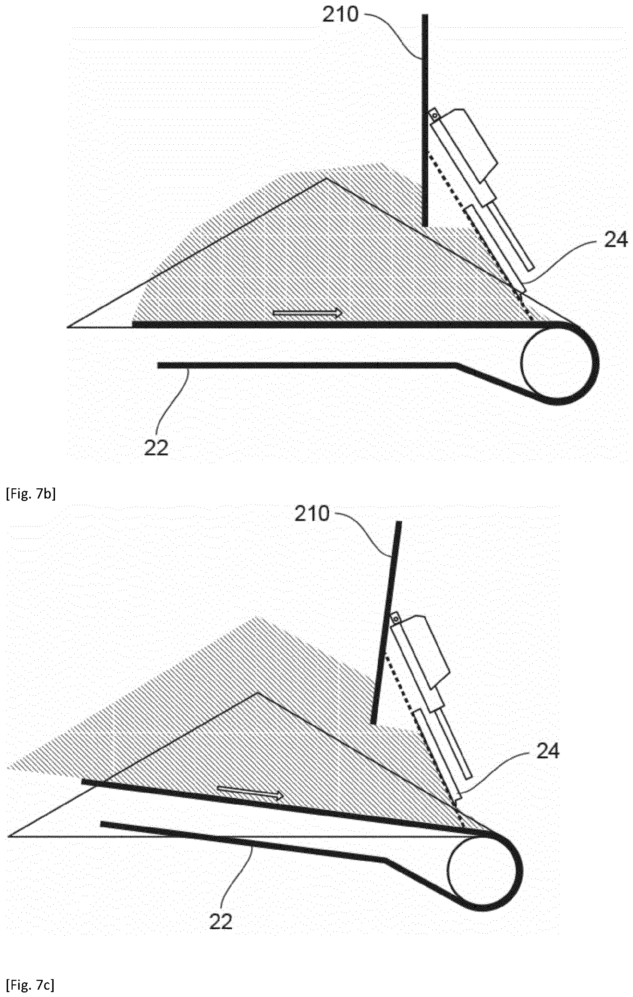

Ainsi, la figure 7a illustre une situation de réglage optimale de l'ouverture de la trappe 24 sur terrain plat, montrant notamment qu'aucun écoulement de particules non souhaité n'a lieu. La figure 7b illustre une situation de réglage optimale de l'ouverture de la trappe 24 sur terrain en légère pente, l'ouverture de la trappe aval 24 étant inchangée par rapport à la situation de la figure 7a car l'angle de la pente permet de conserver la position initiale de la trappe aval 24.

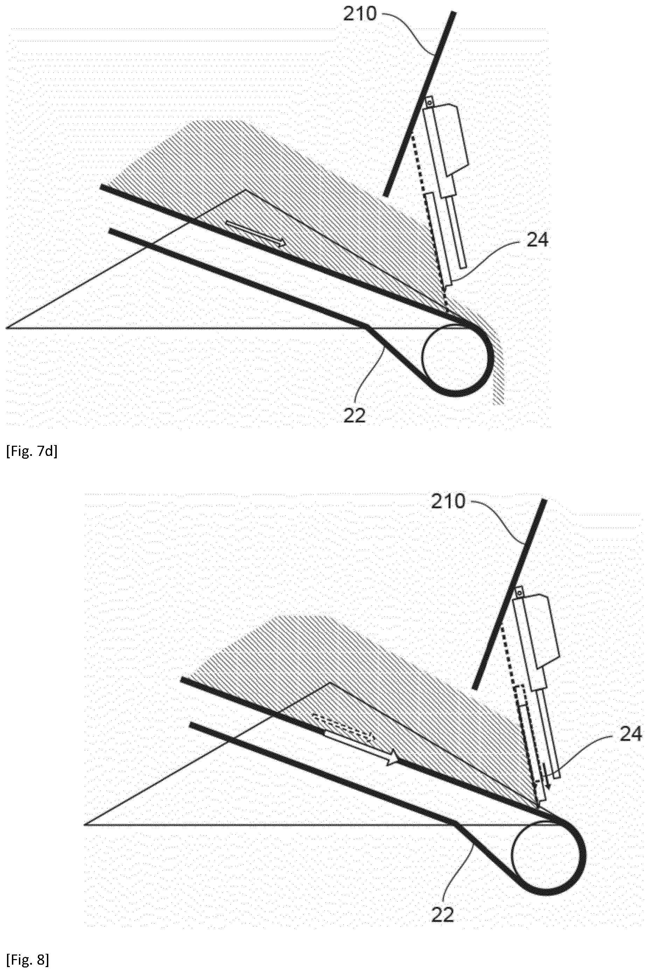

Si l'on considère en revanche que l'épandeur continue à se déplacer et que la pente du terrain s'accentue, le risque est d'arriver à la situation illustrée en figure 7c, sans la mise en œuvre de l'invention : la trappe reste ouverte à la même hauteur que sur la figure 7b et on observe un écoulement continu des particules, du fait de la pente. Grâce à la mise en œuvre de l'invention, les moyens de pilotage du dispositif de dosage, à réception d'une information représentative de la pente en temps réel, peuvent diminuer l'ouverture de la trappe aval et ainsi éviter l'écoulement continu des particules, alors retenues par la trappe dont l'ouverture a été réduite. Cette situation est illustré en figure 7d sur laquelle on peut observer que l'ouverture de la trappe aval 24 a été diminuée pour tenir compte de la pente.

On peut donc observer sur cette figure 7d que la trappe aval 24 est très peu ouverte, engendrant potentiellement une baisse de la dose de particules épandue. Il convient alors de trouver un compromis entre le fait d'éviter un écoulement continu des particules à cause de la forte pente et un sous-dosage des particules à épandre à cause de la fermeture importante de la trappe aval. Ce compromis peut être atteint, selon l'invention, en prévoyant des moyens de régulation de la vitesse du convoyeur en fonction de la position de la trappe 24 et de l'information de pente. Ainsi, il est prévu, selon ce mode de réalisation, que le dispositif de dosage puisse ralentir le tapis du convoyeur ou au contraire augmenter sa vitesse, en fonction de l'ouverture de la trappe aval et donc de la pente, afin de compenser l'effet du pilotage de la position de la trappe aval. Dans le cas illustré en figure 7d, la vitesse du tapis pourrait être augmentée par les moyens de régulation de la vitesse du convoyeur (non illustrés) afin d'augmenter l'apport en particules au niveau de la trappe aval 24 et ainsi compenser la faible ouverture de sortie des particules, de sorte à rétablir la dose souhaitée de particules à épandre, même en configuration de forte pente. Dans une situation inverse, non illustrée, de forte pente négative et de grande ouverture de la trappe aval, le tapis pourrait au contraire ralentir afin de limiter l'apport en particules au niveau de la trappe aval 24 en position de grande ouverture.

Revenons à nouveau à l'exemple de la situation illustrée en figure 7d, et dans le cas où la vitesse du tapis serait ajustée et donc augmentée pour pouvoir respecter la dose souhaitée de particules. Il existe alors un risque de compression des particules dans le dispositif de dosage, et l'invention propose également de renforcer la prévention de ce risque de compression, grâce à la mise en œuvre d'un tunnel d'amenée des particules, par exemple d'une hauteur de 200 millimètres. Ce tunnel, non illustré sur la figure 7d, présente une ouverture d'entrée et une ouverture de sortie, l'ouverture de sortie étant contrôlée par la ou les trappes aval 24 et l'ouverture d'entrée étant contrôlée par une deuxième trappe, dite trappe amont. Par ailleurs, selon ce mode de réalisation de l'invention, le dispositif de dosage comprend des moyens de pilotage de l'ouverture de cette trappe amont, tenant compte également de l'information de pente $\alpha_{pente}$.

Un tel tunnel 26 avec une trappe amont 27 sont par exemple illustrés en figure 8, et a pour objectif de limiter les risques de compression et de bourrage des particules au niveau de la ou des trappes aval 24.

Selon une caractéristique particulière, les moyens de pilotage de la trappe amont 26 permettent notamment de ménager un décrochement d par rapport à la partie supérieure du tunnel. Un tel décrochement a pour effet de limiter encore le risque de compression des particules au niveau de la ou des trappes aval, notamment en cisaillant les particules qui passent sous l'arête de la trappe amont et en les faisant tourner de sorte que les particules circulent dans le tunnel sans entrave, jusqu'à la ou les trappes aval 24. Par exemple, un décrochement de 10 millimètres est suffisant avec un produit Vrac Humide, de type marne sans paille. Sur la figure 8, le décrochement d mesure environ 9 millimètres.

Par ailleurs, afin d'améliorer encore la prévention du risque de compression et de bourrage des particules, le dispositif de dosage comprend des moyens de détection d'une compression, ou d'une pression supérieure à un seuil prédéterminé, dans le tunnel, ainsi que des moyens de génération d'une alarme, dite alarme de bourrage, si une compression est détectée pendant un laps de temps prédéterminé. La «surpression» peut également être la conséquence de la pente qui vient suralimenter en produit et créer une compaction.

Plusieurs moyens peuvent être envisagés pour effectuer cette détection de pression, par exemple :

- dans le tunnel :

  - via au moins un capteur de pression, tel qu'un manomètre par exemple, ou de manière « indirecte » via une pièce mobile actionnée par la montée en pression et dont on détecte le déplacement par un simple capteur fin de course par exemple, type volet mobile monté sur la partie supérieure du tunnel.
  - via au moins un capteur de pesée allié avec un algorithme de pesée qui permet d'avertir le conducteur avec une alarme de prévention d'un risque de bourrage. Un tel algorithme de détection pourrait fonctionner avec deux seuils, le $2^{ème}$ seuil permettant de détecter un risque de bourrage s'il est dépassé pendant une durée prédéfinie, le $1^{er}$ seuil permettant d'éviter les alarmes trop fréquentes avec un bourrage finalement non avéré.

- via au moins une caméra placée en sortie du tunnel, pour permettre au conducteur, s'il le souhaite, de vérifier le non-bourrage de sa machine.
- au niveau de la ou des trappes aval : via au moins un capteur de mesure de puissance d'au moins un actionneur pilotant l'une des trappes aval et/ou via au moins un capteur d'effort sur la ou les trappes aval.

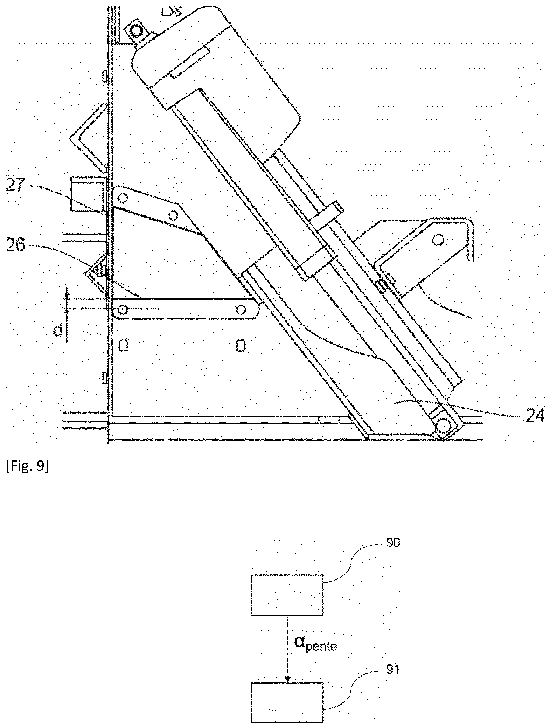

Enfin, la figure 9 illustre un procédé de dosage selon l'invention, pour système de distribution de particules pour machine agricole pouvant se déplacer sur un terrain, comprenant un réservoir présentant dans une partie inférieure un convoyeur apte à transporter les particules vers un orifice de sortie du réservoir, comprenant au moins une trappe mobile pouvant prendre une pluralité de positions entre une position fermée et une position ouverte, et mettant en œuvre les étapes suivantes :

- une étape d'obtention 90 d'une information $\alpha_{pente}$ représentative d'une pente d'un terrain sur lequel la machine agricole se déplace et
- une étape de pilotage 91 de la position de la trappe aval en fonction de l'information de pente $\alpha_{pente}$.

Le procédé de dosage peut présenter les différentes caractéristiques relatives au dispositif de dosage, décrites précédemment, combinées ou prises isolément.

Il est d'ailleurs possible de contrôler la mise en œuvre et le bon fonctionnement du procédé de dosage et des différents moyens mis en œuvre, comme décrit ci-après.

Ce contrôle peut être réalisé sans amener l'épandeur dans une parcelle, y compris sans possibilité de liaison à un GPS ou moyen de mesure des conditions climatiques extérieures. Il convient de disposer de moyens techniques permettant simulation et envoi à la console de pilotage de l'épandeur, par exemple pour constater des informations nécessaires au fonctionnement comme la vitesse, la dose cible, la largeur de travail cible et le débit, ou encore les différents paramètres utilisés dans l'équation permettant le calcul de la limite d'ouverture de la ou les trappes aval, décrite précédemment.

Par exemple, il suffit de disposer :

- de l'épandeur à tester ;
- de moyens d'inclinaison de l'épandeur pour simuler une pente, ces moyens permettant avantageusement de modifier l'angle de la pente au cours du contrôle ; ces moyens permettant également, le cas échéant, de simuler un dévers ;
- des moyens de pilotage de cet épandeur (console, ...) ;
- d'une batterie ou source de puissance électrique pour alimenter les actuateurs et les organes de pilotage de l'épandeur ;
- éventuellement d'une source hydraulique correctement dimensionnée si les moyens d'action sont des organes hydrauliques (par exemple le tapis du convoyeur et/ou les vérins hydrauliques pour actionner les trappes aval et amont ...) ;

- d'un tableau de synthèse permettant le relevé manuel :

  - des paramètres de réglage de l'épandeur, successivement modifiés via la console de pilotage dudit épandeur ;
  - des actions engendrées par ces paramètres successivement modifiés sur les organes clés de l'épandeur : positions successives de la ou des trappes aval, de la trappe amont, réglage de l'angle d'inclinaison de la ou des trappes aval, modification de la vitesse du tapis du convoyeur ...

Éventuellement, il convient de se munir d'un réglet gradué, ou tout autre instrument de mesure adapté à la configuration, permettant des mesures de position desdits organes clés (dans le cas où l'épandeur n'est pas muni de repères repérant la (les) position (s) desdits organes clés) et notamment de la ou desdits trappes aval et de la trappe amont.

Les étapes de contrôle peuvent être les suivantes :

- régler la dose souhaitée, selon le type de particules à épandre ;
- mesurer les positions de la ou des trappes aval, l'épandeur non incliné ;
- mesurer la position de la trappe amont, l'épandeur non incliné ;
- mesurer la vitesse du tapis du convoyeur ;
- incliner l'épandeur et identifier les éventuelles conséquences de cette inclinaison sur les positions des différentes trappes ainsi que sur la vitesse du tapis du convoyeur. Si une action est détectée, on mesure la conséquence de cette action. Par exemple, si la position de la trappe aval a été modifiée, on déduit d'ores et déjà que l'épandeur est doté d'un asservissement de la position/l'ouverture de cette trappe en fonction de la pente détectée par l'épandeur. On peut également mesurer la modification et comparer avec une courbe qui pourrait être obtenue à partir de l'équation précitée, sans oublier le fonctionnement par palier. Selon un autre exemple, si la vitesse du tapis a été modifiée, on déduit d'ores et déjà que l'épandeur est doté d'un asservissement de la vitesse du tapis du convoyeur en fonction de la pente détectée par l'épandeur ;
- cette étape peut être réitérée en changeant le degré d'inclinaison de l'épandeur.

Pour vérifier le bon réglage de la position de la ou des trappes aval en fonction du type de particules, on peut modifier les paramètres de l'épandeur, par exemple en modifiant directement l'angle de talus, et contrôler si cela entraine une conséquence sur la position de la ou des trappes aval.

Pour vérifier le bon fonctionnement des moyens mis en œuvre pour détecter une pression dans le tunnel d'amenée des particules, en amont de la ou des trappes aval, on peut appliquer une pression manuellement ou à l'aide d'un outil et constater qu'une alarme est générée. Ce contrôle peut donc être effectué sans être obligé de charger la machine de particules.

## Revendications

**1.** Dispositif de dosage (20) pour système de distribution de particules pour machine agricole (200) pouvant se déplacer sur un terrain, comprenant un réservoir (21) présentant dans une partie inférieure un convoyeur (22) apte à transporter lesdites particules vers un orifice de sortie (23) dudit réservoir, comprenant au moins une trappe mobile, dite trappe aval (24), pouvant prendre une pluralité de positions entre une position fermée et une position ouverte, **caractérisé en ce qu'**il comprend des moyens d'obtention d'une information $\alpha_{pente}$ représentative d'une pente d'un terrain sur lequel ladite machine agricole se déplace, et des moyens de pilotage de la position de la ou desdites trappes aval tenant compte de ladite information de pente $\alpha_{pente}$ lesdits moyens de pilotage délivrant une information de limite d'ouverture de ladite au moins une trappe aval tenant compte de ladite information de pente $\alpha_{pente}$ et d'une information $\alpha_T$ d'angle de talus caractéristique desdites particules.

**2.** Dispositif de dosage selon la revendication 1, **caractérisé en ce que** lesdits moyens de pilotage réduisent l'ouverture de ladite au moins une trappe aval lorsque ladite information de pente $\alpha_{pente}$ correspond à une pente positive dans le sens de déplacement de la machine agricole et/ou augmentent l'ouverture de ladite au moins une trappe aval lorsque ladite information de pente $\alpha_{pente}$ correspond à une pente négative dans le sens de déplacement de la machine agricole.

**3.** Dispositif de dosage selon la revendication 1, **caractérisé en ce que** ladite au moins une trappe aval est inclinée par rapport au plan dudit convoyeur, de façon que, en position fermée, une extrémité inférieure de ladite trappe aval se situe sensiblement à la verticale d'un axe de rotation d'un tambour d'entraînement du convoyeur, et **en ce que** ladite information de limite d'ouverture tient également compte d'une information $\alpha_{trappe}$ d'inclinaison de ladite au moins une trappe aval.

**4.** Dispositif de dosage selon la revendication 1, **caractérisé en ce que** ladite information de limite d'ouverture tient compte d'un point E dont les coordonnées $(X_E; Y_E)$ sont calculées comme suit et délivrée par lesdits moyens de pilotage, dans un référentiel R défini par un axe d'abscisse s'étendant dans le plan du convoyeur et parallèle à la direction de déplacement dudit convoyeur et un axe d'ordonnée s'étendant perpendiculairement audit plan dudit convoyeur et passant par la paroi arrière du réservoir :

$$(X_E ; Y_E) = ([Y_D - Y_C]/[Tan\alpha_{trappe} - Tan\alpha] ; Y_D - X_E * Tan\alpha_{trappe})$$

avec :

- $(X_A; Y_A)$ correspondant aux coordonnées de l'axe A, dans le référentiel R, du tambour d'entrainement dudit convoyeur
- $\alpha_{convoyeur}$ correspondant à l'angle d'inclinaison du tapis dudit convoyeur
- 

$$\alpha = \alpha_T + \alpha_{convoyeur} - \alpha_{pente}$$

- $(X_B; Y_B) = (X_A + Sin\alpha * [AB] ; Y_A + Cos\alpha * [AB])$ avec $[AB]$ correspondant au rayon du tambour d'entrainement dudit convoyeur, de centre A
- 

$$(X_C ; Y_C) = (0 ; Y_B + X_B * Tan\alpha)$$

- $(X_D; Y_D)$ correspondant au point d'intersection entre la surface arrière dudit réservoir et la surface de glissement de ladite au moins une trappe.

**5.** Dispositif de dosage selon la revendication 4, **caractérisé en ce que** ladite information de limite d'ouverture présente une valeur de coordonnée $Y'_E$, dite valeur palier, identique pour chaque valeur de ladite information de pente $\alpha_{pente}$ comprise dans un intervalle donné, ladite valeur palier $Y'_E$ étant inférieure ou égale à ladite valeur de coordonnée $Y_E$.

**6.** Dispositif de dosage selon la revendication 1, **caractérisé en ce que** ladite information $\alpha_{pente}$ est également représentative d'un dévers du terrain sur lequel ladite machine agricole se déplace.

**7.** Dispositif de dosage selon la revendication 1, **caractérisé en ce qu'**il comprend des moyens de régulation de la vitesse dudit convoyeur tenant compte de la position de ladite au moins une trappe aval et/ou de ladite information de pente $\alpha_{pente}$.

**8.** Dispositif de dosage selon la revendication 7 et la revendication 1, **caractérisé en ce que** lesdits moyens de régulation de la vitesse dudit convoyeur tiennent compte de ladite information de limite d'ouverture E.

**9.** Dispositif de dosage selon la revendication 1, **caractérisé en ce qu'**il comprend des moyens de réglage d'un angle d'inclinaison de la ou desdites trappes aval.

**10.** Dispositif de dosage selon la revendication 1, **caractérisé en ce qu'**il comprend un tunnel (26) d'amenée des particules, présentant une ouverture d'entrée et une ouverture de sortie, l'ouverture de sortie étant contrôlée par la ou lesdites trappes aval et l'ouverture d'entrée étant contrôlée par une deuxième trappe, dite trappe amont (27), et **en ce qu'**il comprend des moyens de pilotage de l'ouverture de ladite trappe amont, tenant compte également de ladite information de pente $\alpha_{pente}$.

**11.** Dispositif de dosage selon la revendication 10, **caractérisé en ce que** lesdits moyens de pilotage de l'ouverture de ladite trappe amont agissent de façon à ménager un décrochement (d) par rapport à la partie supérieure dudit tunnel.

**12.** Dispositif de dosage selon la revendication 10, **caractérisé en ce qu'**il comprend des moyens de détection d'une compression, ou pression supérieure à un seuil prédéterminé, dans ledit tunnel.

**13.** Dispositif de dosage selon la revendication 12, **caractérisé en ce qu'**il comprend des moyens de génération d'une alarme, dite alarme de bourrage, si une compression est détectée, par lesdits moyens de détection, pendant un laps de temps prédéterminé.

**14.** Dispositif de dosage selon la revendication 12, **caractérisé en ce que** lesdits moyens de détection d'une compression comprennent au moins un des éléments appartenant au groupe comprenant :

- au moins un capteur de pression monté dans ledit tunnel ;
- au moins un capteur de déplacement d'un volet mobile monté sur la partie supérieure dudit tunnel ;
- au moins une caméra placée en sortie dudit tunnel ;
- au moins un capteur de pesée monté dans ledit tunnel ;
- au moins un capteur de mesure de puissance d'au moins un actionneur pilotant l'une desdites trappes aval,
- au moins un capteur d'effort sur l'une desdites trappes aval.

**15.** Procédé de dosage pour système de distribution de particules pour machine agricole pouvant se déplacer sur un terrain, comprenant un réservoir présentant dans une partie inférieure un convoyeur apte à transporter lesdites particules vers un orifice de sortie dudit réservoir, comprenant au moins une trappe mobile pouvant prendre une pluralité de positions entre une position fermée et une position ouverte,
**caractérisé en ce qu'**il comprend :

- une étape d'obtention (90) d'une information $\alpha_{pente}$ représentative d'une pente d'un terrain sur lequel ladite machine agricole se déplace et
- une étape de pilotage (91) de la position de ladite trappe aval en fonction de ladite information de pente $\alpha_{pente}$, ladite étape de pilotage délivrant une information de limite d'ouverture de ladite au moins une trappe aval tenant compte de ladite information de pente $\alpha_{pente}$ et d'une information $\alpha_T$ d'angle de talus caractéristique desdites particules.

**16.** Machine agricole de distribution de particules, comprenant un réservoir présentant dans une partie inférieure un convoyeur apte à transporter lesdites particules vers un orifice de sortie dudit réservoir,

**caractérisé en ce qu'**elle comprend un système de distribution de particules mettant en œuvre un dispositif de dosage comprenant au moins une trappe mobile, dite trappe aval, pouvant prendre une pluralité de positions entre une position fermée et une position ouverte,
ledit dispositif comprenant des moyens d'obtention d'une information $\alpha_{pente}$ représentative d'une pente d'un terrain sur lequel ladite machine agricole se déplace, et des moyens de pilotage de la position de la ou desdites trappes aval tenant compte de ladite information de pente $\alpha_{pente}$, lesdits moyens de pilotage délivrant une information de limite d'ouverture de ladite au moins une trappe aval tenant compte de ladite information de pente $\alpha_{pente}$ et d'une information $\alpha_r$ d'angle de talus caractéristique desdites particules.

[Fig. 1]

[Fig. 2]

[Fig. 3a]

21

24

22

D

[Fig. 3b]

21

24

22

D

[Fig. 4]

[Fig. 5]

[Fig. 6]

Hauteur trappes

[Fig. 7a]

210

24

22

[Fig. 7b]

210

24

22

[Fig. 7c]

[Fig. 7d]

[Fig. 8]

[Fig. 9]

27

26

d

24

90

$\alpha_{pente}$

91

Europäisches
Patentamt

European
Patent Office

Office européen
des brevets

# RAPPORT DE RECHERCHE EUROPEENNE

Numéro de la demande

EP 25 16 3702

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y<br><br>A | AU 2003 204 319 A1 (DAVID HOYLE)<br>11 décembre 2003 (2003-12-11)<br>* page 2, ligne 9 - ligne 27 *<br>* page 11, ligne 13 - ligne 34 *<br>* page 12, ligne 1 - ligne 20 *<br>* page 13, ligne 6 - ligne 34 *<br>* page 14, ligne 13 - ligne 25 *<br>* revendications; figures *<br>----- | 1-3,6-9,<br>15,16<br>4,5,<br>10-14 | INV.<br>A01C15/12<br>A01C21/00 |
| Y,D | EP 3 138 375 A1 (SULKY-BUREL [FR])<br>8 mars 2017 (2017-03-08)<br>* abrégé *<br>* page 4, alinéas 26-28,30,31,33,34 *<br>* page 6, alinéa 56 *<br>* page 7, alinéa 58 *<br>* pages -; revendications; figures *<br>----- | 1-3,6-9,<br>15,16 | |
| A | US 7 980 484 B1 (PODOLL MICHAEL J [US] ET AL) 19 juillet 2011 (2011-07-19)<br>* abrégé *<br>* colonne 4, ligne 20 - ligne 32 *<br>* revendications; figures *<br>----- | 1,15,16 | |
| A | DE 10 2020 119431 A1 (AMAZONEN WERKE H DREYER SE & CO KG [DE])<br>27 janvier 2022 (2022-01-27)<br>* abrégé *<br>* page 12, alinéas 70,72 *<br>* revendications; figures *<br>----- | 1,15,16 | **DOMAINES TECHNIQUES RECHERCHES (IPC)**<br><br>A01C |

Le présent rapport a été établi pour toutes les revendications

| Lieu de la recherche | Date d'achèvement de la recherche | Examinateur |
|---|---|---|
| La Haye | 7 juillet 2025 | Oltra García, R |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

............................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 16 3702

07-07-2025

| Document brevet cité au rapport de recherche | Date de publication | Membre(s) de la famille de brevet(s) | Date de publication |
|---|---|---|---|
| AU 2003204319 A1 | 11-12-2003 | AU 2003204319 A1 | 11-12-2003 |
| | | DE 10323251 A1 | 04-12-2003 |
| | | NZ 519153 A | 24-09-2004 |
| | | US 2003226916 A1 | 11-12-2003 |
| EP 3138375 A1 | 08-03-2017 | BR 102016020210 A2 | 07-03-2017 |
| | | DK 3138375 T3 | 06-05-2019 |
| | | EP 3138375 A1 | 08-03-2017 |
| | | FR 3040255 A1 | 03-03-2017 |
| | | PL 3138375 T3 | 30-08-2019 |
| US 7980484 B1 | 19-07-2011 | AUCUN | |
| DE 102020119431 A1 | 27-01-2022 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   EP 3138375 A